# EUROPÄISCHE PATENTSCHRIFT

(11) **EP 0 633 653 B1**
(45) Veröffentlichungstag und Bekanntmachung des Hinweises auf die Patenterteilung: **27.09.1995**
(21) Anmeldenummer: 93111046.4
(22) Anmeldetag: 09.07.1993
(51) Int. Cl.: H02M 7/5387

(54) **Stromregelverfahren und Vorrichtung für einen spannungseinprägenden Umrichter**
Method of current regulation and device for a voltage converter
Procédé de régulation de courant et dispositif pour un convertisseur de tension

(43) Veröffentlichungstag der Anmeldung: 11.01.1995
(73) Patentinhaber: SIEMENS AKTIENGESELLSCHAFT, 80333 München (DE)
(72) Erfinder: Bauer, Franz, Dr.-Ing., D-91074 Herzogenaurach (DE); Schierling, Hubert, Dr.-Ing., D-91052 Erlangen (DE)

(56) Entgegenhaltungen:
- US-A- 5 038 092
- IEEE TRANSACTIONS ON INDUSTRY APPLICATIONS Bd. IA-22, Nr. 4 , August 1986 , TORONTO CANADA Seiten 691 - 696 ALBERTO J. POLLMANN 'SOFTWARE PULSEWIDTH MODULATION FOR muP CONTROL OF AC DRIVES'
- IEEE TRANSACTION ON INDUSTRY APPLICATIONS Bd. IA-16, Nr. 2 , April 1980 , CLEVELAND, OH Seiten 186 - 192 RUPPRECHT GABRIEL 'FIELD-ORIENTED CONTROL OF A STANDARD AC MOTOR USING MICROPROCESSORS'

## Beschreibung

Die Erfindung bezieht sich auf ein Stromregelverfahren für einen spannungseinprägenden Umrichter, wobei eine flußbildende Stromkomponente und eine drehmomentbildende Stromkomponente eines ermittelten Ist-Stromvektors jeweils auf eine gewünschte Stromkomponente eines Soll-Stromvektors geregelt werden, wobei jeweils eine Regler-Stellgröße mit einer Vorsteuergröße überlagert wird, und auf eine Vorrichtung zur Durchführung dieses Verfahrens.

Bei geregelten Antrieben mit Drehfeldmaschinen ist es häufig erforderlich, gewünschte Ströme in die Maschine einzuprägen. Werden Umrichter mit Spannungssollwerteingang (spannungseinprägende Umrichter, z.B. Pulsumrichter, Direktumrichter) verwendet, müssen die Sollspannungen so ermittelt werden, daß sich die gewünschten Ströme in der Maschine ergeben. Die Dynamik des Antriebs ist davon abhängig, wie gut dabei der Strom-Istwert dem Strom-Sollwert folgen kann.

Die Realisierung eines gewünschten Stromes wird auf unterschiedliche Art gelöst. Aus der "IEEE Transactions on Industry Applications", Vol., IA-16, Nr. 2, March/April 1980, Seiten 186 bis 192 oder aus der "IEEE Transactions on Industry Applications", Vol., IA-22, Nr. 4, July/August 1986, Seiten 691 bis 696, ist jeweils eine Stromregelung bekannt, die den Stromvektor in seinen zwei Komponenten mittels zweier Stromregler auf den gewünschten Sollwert regelt. Die Stromregler werden durch eine Vorsteuerung unterstützt, die die von der Maschine benötigten Spannungen berechnet. Die Stromregler müssen an ihrem Ausgang nurmehr die Spannungen liefern, die von der Vorsteuerung nicht ermittelt werden (z.B. dynamische Anteile, Fehler, etc). Zweckmäßigerweise werden die Ströme in feldorientierten System geregelt, weil in diesem Koordinatensystem die Ströme leicht zu regelnde Gleichströme sind und sich die Spannungen zur Vorsteuerung der Stromregler leicht berechnen lassen. Dieses Regelverfahren wird auch als Zweikomponenten-Stromregelung bezeichnet. Die Zweikomponenten-Stromregelung zeichnet sich durch ein sehr gutes dynamisches Verhalten vor allem im Bereich kleiner und mittlerer Drehzahlen aus.

Zwischen den beiden Regelkreisen besteht jedoch eine mit wachsender Drehzahl stetig zunehmende Verkoppelung, die sich bei verstimmtem Vorsteuernetzwerk - vor allem bei kleinen Reglerverstärkungen - in langsamen Auslaßvorgängen störend bemerkbar macht. Die Zweikomponenten-Stromregelung kann bei hoher Aussteuerung nur arbeiten, wenn eine Spannungsreserve vorhanden ist. Da die Blindstromkomponente - und nicht der Fluß - eingeprägt wird, reagiert der Antrieb sehr empfindlich auf eine Fehleinstellung der Hauptinduktivität. In der Regel ist daher eine überlagerte Flußregelung erforderlich.

Die Stabilität dieser Art Stromregelung hängt von der Frequenz und von der Regelverstärkung der Stromregler ab. Je größer die Frequenz bzw. je kleiner die Verstärkung, umso schlechter wird die Dämpfung der Regelung. Eine Schwierigkeit liegt nun darin, daß gerade bei höherer Frequenz wegen geringerer Dynamik des Stromrichters in diesem Betriebsbereich die Regelverstärkung zurückgenommen werden muß. Eine weitere Schwierigkeit tritt im Feldschwächbetrieb auf. Hier muß das. Feld bei der Zweikomponenten-Stromregelung so weit geschwächt werden, daß eine gewisse Aussteuerreserve noch zur Verfügung steht, was die Stromrichterausnutzung mindert.

Aus dem Aufsatz "Drehzahlregelung um Null", abgedruckt in der Zeitschrift "Elektrotechnik", Band 74, Heft 7/8, 21. August 1992, Seiten 24 bis 31, ist eine weitere Stromregelung bekannt, die als Wirkstromregelung bezeichnet wird. Hier wird ähnlich wie bei der Zweikomponenten-Stromregelung mittels einer Vorsteuerung der Spannungs-Sollwert in feldorientierten Koordinaten ermittelt. Der Strom wird allerdings nur mehr in momentenbildender Richtung mit einem Wirkstromregler über eine Frequenzänderung des Spannungs-Sollreglers geregelt, die zweite Stromkomponente, der Magnetisierungsstrom, stellt sich ein. Bei dieser Wirkstromregelung wird nur der Wirkstrom, also nur eine der beiden Stromkomponenten des Motorstroms im feldorientierten Koordinatensystem geregelt. Stellgröße ist die Ständerfrequenz. Die Komponenten der Ständerspannung ergeben sich ausschließlich aus dem Vorsteuernetzwerk.

Wird hier die Aussteuergrenze des Stromrichters erreicht, so ist der Wirkstromregler über eine Frequenzänderung immer noch in der Lage, den Wirkstrom auf einem bestimmten Wert zu regeln. Eine überlagerte Spannungsmaximumregelung speist das Vorsteuernetzwerk näherungsweise mit dem tatsächlich in der Maschine fließenden Magnetisierungsstrom. Der Übergang vom Grunddrehzahl in den Feldschwächbereich gestaltet sich problemlos, es kann der maximale Aussteuerbereich genutzt werden. Eine überlagerte Spannungsmaximumregelung paßt sich im Feldschwächbereich dem Magnetisierungsstrom-Sollwert für das Vorsteuernetzwerk an.

Die Vorteile dieses Verfahrens liegen bei hohen Drehzahlen und hohen Aussteuerungen. Die Wirkstromregelung benötigt keine Spannungsreserve. Der Übergang in die Feldschwächung vollzieht sich problemlos. Da die Spannung entsprechend dem gewünschten Fluß berechnet und eingeprägt wird, ist keine überlagerte Flußregelung erforderlich.

Bei der Wirkstromregelung treten gegenüber der Zweikomponenten-Stromregelung andere Nachteile auf. Weil der Stromregler nur die Frequenz des Spannungssollwertes beeinflußt, weist diese Regelung nur eine geringe Dynamik auf. Eine weitere Schwierigkeit tritt bei kleinen Frequenzen auf. Hier ist Länge und Lage des Spannungs-Sollzeigers so, daß mit einer Frequenzänderung durch den Wirkstromregler nicht die gewünschte Änderung im Wirkstrom hervorgerufen wird. Unterhalb einer Minimalfrequenz ist der Betrieb der Wirkstromregelung nicht anwendbar.

Der Erfindung liegt nun die Aufgabe zugrunde, ein Stromregelverfahren und eine Vorrichtung zur Durchführung des Verfahrens anzugeben, die die Vorteile einer Zweikomponenten-Stromregelung und einer Wirkstromregelung ohne deren Nachteile vereint, ohne dabei zwischen beiden Regelungen umschalten zu müssen.

Diese Aufgabe wird in Verbindung mit den Merkmalen des Oberbegriffs erfindungsgemäß durch die im Kennzeichen des Anspruchs 1 und 4 angegebenen Merkmale gelöst.

Erfindungsgemäß wird die Zweikomponenten-Stromregelung um einen Querzweig erweitert, der die Ausgangsspannung des Reglers in der Wirkachse über ein Verzögerungsglied auf die Reglerspannung in der Blindachse aufschaltet. Dies bewirkt, daß der Ausgang des Reglers in der Wirkachse nicht nur die Wirkspannung verändert (wie bei der Zweikomponenten-Stromregelung), sondern über die Änderung der Blindspannung auch eine Drehung des Spannungszeigers bewirkt (wie bei der Wirkstromregelung). Gleichzeitig läßt sich durch diesen Querzweig erreichen, daß eine Änderung der Ausgangsspannung in der Wirkachse den Blindstrom nicht beeinflußt, die Regelkreise also entkoppelt sind. Die für die Zweikomponenten-Stromregelung typischen langsamen Ausgleichsvorgänge bei verstimmtem Vorsteuernetzwerk treten daher nicht mehr auf. Für eine ideale Entkopplung wird die Zeitkonstante des Verzögerungsgliedes gleich der Kurzschlußzeitkonstante des Motors gewählt und die Verstärkung proportional zur Ständerfrequenz veränderbar gemacht.

Auf eine überlagerte Flußregelung kann verzichtet werden, wenn der Integralanteil des Reglers in der Blindachse stark begrenzt wird. Da dieser Integralanteil nur bei kleinen Drehzahlen benötigt wird, ist eine frequenzabhängige Begrenzungskennlinie erforderlich.

Dieses erfindungsgemäße Stromregelverfahren verbindet die Vorteile von der Zweikomponenten-Stromregelung und der Wirkstromregelung in idealer Weise miteinander. Solange die Spannung nicht begrenzt ist, hat die neue Struktur das gleiche gute dynamische Verhalten wie die Zweikomponenten-Stromregelung, reagiert aber weniger empfindlich auf ein verstimmtes Vorsteuernetzwerk. Bei Erreichen der Spannungsdecke geht sie automatisch in das Verhalten der Wirkstromregelung über, ohne daß eine Strukturumschaltung erforderlich wäre. Die Stabilität im Feldschwächbereich ist bei der neuen Regelstruktur sogar besser als die der Wirkstromregelung. Wie bei der Wirkstromregelung wäre auch ein Betrieb mit fester Aussteuerung (z.B. reine Vollblocktaktung) möglich.

Weil sich an der Aussteuergrenze das Streckenverhalten ändert, ist es besonders vorteilhaft für optimale Regeleigenschaften, eine Adaption der Koeffizienten der Regelung vorzunehmen. Dies kann geschehen durch:
- Ändern des Proportionalanteils und/oder des Integralanteils des Reglers in der Blindachse
- Ändern des Verstärkungsfaktors des Querzweiges
- Ändern der Zeitkonstanten des Querzweiges
- Kombination dieser einzelnen Möglichkeiten.

Die Änderung der Koeffizienten erfolgt in Abhängigkeit der Aussteuerung oder der Frequenz oder der Drehzahl.

Vorteilhafte Ausgestaltungen der Erfindung sind in den Unteransprüchen gekennzeichnet.

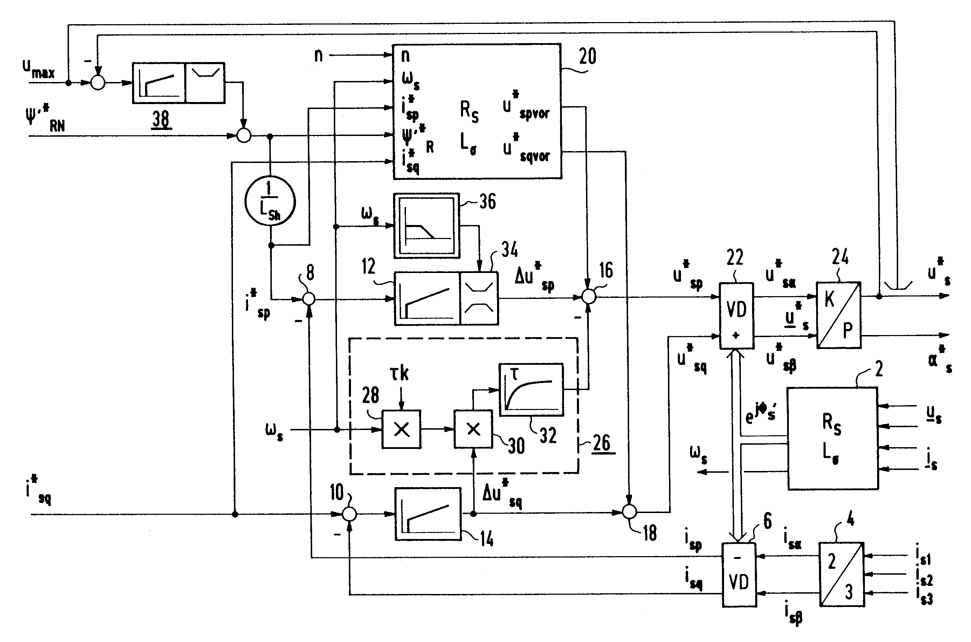

Zur weiteren Erläuterung wird auf die Zeichnung Bezug genommen, in der ein Ausführungsbeispiel einer Vorrichtung zur Durchführung des erfindungsgemäßen Stromregelverfahrens schematisch dargestellt ist.

Die Figur zeigt ein Blockschaltbild einer Vorrichtung zur Durchführung des erfindungsgemäßen Stromregelverfahrens für einen spannungseinprägenden Umrichter. Bei diesem Verfahren werden die Ständerströme einer Asynchronmaschine in einem mit Ständerfrequenz ωₛ drehend, in der Regel am Flußwinkel Φ′ₛ orientierten Koordinatensystem geregelt. Eine derartige Regelung wird als Vektorregelung bezeichnet, mit der es möglich ist, eine Asynchronmaschine regelungstechnisch ähnlich zu führen wie ein Gleichstrommaschine. Hierbei wird mit Hilfe von Transformationsgleichungen für eine mehrphasige Maschine ein zweiphasiges Modell aufgestellt, in dem die flußbildende Stromkomponente iₛₚ und die drehmomentbildende Stromkomponente i_{sq} unabhängig voneinander geregelt werden. Bei einer Änderung der Belastung wird die drehmomentbildende Stromkomponente i_{sq} unverzüglich auf ihren neuen Wert geregelt, während die flußbildende Stromkomponente iₛₚ ihren alten beibehält. Die Stellgröße des Stromregelverfahrens sind die beiden Komponenten u*ₛₚ und u*_{sq} der Ständerspannung u*ₛ in diesem Koordinatensystem, da die Regelung für einen spannungseinprägenden Umrichter, beispielsweise einen Pulsumrichter oder Direktumrichter, vorgesehen ist.

Zum Ermitteln der fluß- und drehmomentbildenden Stromkomponenten iₛₚ und i_{sq} benötigt die Vektorregelung sowohl die Kenntnis der Größen des Ersatzschaltbildes der Asynchronmaschine (Wicklungswiderstand R_{S}, Streuinduktivität L_{σ} und Hauptinduktivität Lₕ) als auch den aktuellen Drehzahl-Istwert n. Mittels eines Flußrechners 2, dem ein Spannungs-Istvektor uₛ und ein Strom-Istvektor iₛ zugeführt ist, werden mittels der Koeffizienten R_{S} und L_{σ} der Betrag des Rotorflusses Ψ′_{R} und dessen Lage Φ′ₛ ermittelt. Ausführungsformen des Flußrechners 2 und deren Arbeitsweise ist dem Vortragsmanuskript "Field-Oriented Control In Modern Drive Technology", abgedruckt in Variable Speed A-C Drives Seminar Proceedings, June 7-8, 1993, Seiten II47 bis II56, zu entnehmen. Mit Hilfe der ermittelten Flußlage Φ′ₛ, eines Koordinatenwandlers 4 und eines Vektordrehers 6 werden die gemessenen Phasenströme iₛ₁, iₛ₂ und iₛ₃ in eine fluß- und drehmomentbildende Stromkomponente iₛₚ und i_{sq} transformiert. Der Flußrechner 2, der Koordinatenwandler 4 und der Vektordreher 6 sind sehr oft in der Praxis zu einer Baueinheit zusammengefaßt, die sich Istwertrechner nennt.

Diese ermittelten Stromkomponenten iₛₚ und i_{sq} werden jeweils einem Vergleicher 8 und 10 zugeführt, an deren nicht invertierenden Eingängen jeweils ein Stromkomponenten-Sollwert i*ₛₚ und i*_{sq} anstehen. Ausgangsseitig ist jeder Vergleicher 8 bzw. 10 mit einem Stromregler 12 bzw. 14 verknüpft, der ausgangsseitig mit einem Addierer 16 bzw. 18 verbunden ist. Als Regler 12 bzw. 14 ist ein proportional-integralwirkender Regler vorgesehen. Diese Stromregler 12 und 14 werden von einem Vorsteuernetzwerk 20 dadurch unterstützt, daß Vorsteuergrößen u*ₛₚᵥₒᵣ und u*_{sqvor} bestimmt werden, die jeweils dem Addierer 16 und 18 zugeführt werden. Somit müssen die Stromregler 12 und 14 an ihren Ausgängen nur mehr die Spannung Δu*ₛₚ und Δu*_{sq} liefern, die vom Vorsteuernetzwerk 20 nicht ermittelt werden, beispielsweise dynamische Anteile, Fehler, etc.. Die Ausgänge der beiden Addierer 16 und 18 werden einem zweiten Vektordreher 22 mit nachgeschalteten Koordinatenwandler 24 zugeführt. Mit diesem Vektordreher 22 und Koordinatenwandler 24 werden die anstehenden Spannungskomponenten u*ₛₚ und u*_{sq} zunächst in ständerorientierte Spannungskomponenten u*_{sα} und u*_{sβ} gewandelt, die rechtwinklig zueinander sind. Diese karthesischen, ständerorientierten Spannungskomponenten u*_{sα} und u*_{sβ} werden dann in polare Spannungskomponenten u*ₛ und α*ₛ transformiert. Dieses Regelverfahren wird auch als Zweikomponenten-Stromregelung bezeichnet und ist im näherbezeichneten Vortragsmanuskript ausführlich beschrieben worden.

Das Vorsteuernetzwerk 20, das auch als Entkopplungsnetzwerk bezeichnet wird, ist auch in diesem Vortragsmanuskript ausführlich dargestellt und beschrieben worden, so daß hier nur das wesentliche genannt wird. Das Vorsteuernetzwerk 20 benötigt folgende Eingangsgrößen: Drehzahl-Istwert n, Ständerfrequenz ωₛ, Rotorfluß-Sollwert Ψ′*_{R} und der fluß- und drehmomentbildende Stromkomponenten-Sollwert i*ₛₚ und i*_{sq}. Außerdem benötigt dieses Vorsteuernetzwerk 20 die Werte der Koeffizienten Ständerwiderstand R_{S} und Streuinduktivität L_{σ}. Aufgrund der Sollwertvorgaben berechnet das Vorsteuernetzwerk 20 die zu erwartenden Spannungsanteile u*ₛₚᵥₒᵣ und u*_{sqvor}, die zur Entlastung der Stromregler 12 und 14 auf deren Reglerausgänge aufgeschaltet werden. Sind die Parameter R_{S} und L_{σ} der Vorsteuerung richtig eingestellt, so liefern die Stromregler 12 und 14 an ihren Ausgängen eine Regler-Stellgröße Δu*ₛₚ und Δu*_{sq}, die jeweils gleich Null ist. Die gesamte, für die gewünschten Stromkomponenten i*ₛₚ und i*_{sq} erforderlichen Spannungskomponenten u*ₛₚ und u*_{sq} werden vom Vorsteuernetzwerk 20 berechnet.

Würde der Regelkanal für die flußbildende Stromkomponente iₛₚ fehlen, so hätte man die Regelstruktur der sogenannten Wirkstromregelung, deren Blockschaltbild ebenfalls im Vortragsmanuskript dargestellt und erläutert ist. Bei der Wirkstromregelung wird nur der Wirkstrom, also die drehmomentbildende Stromkomponente i*_{sq}, geregelt. Stellgröße bei dieser Regelung ist die Ständerfrequenz ωₛ. Die SpannungskomponentenSollwerte u*ₛₚ und u*_{sq} werden ähnlich wie bei der Zweikomponenten-Stromregelung mittels eines Vorsteuernetzwerkes ermittelt.

Das erfindungsgemäße Regelverfahren kombiniert die Zweikomponenten-Stromregelung mit der Wirkstromregelung. Dazu wird die Zweikomponenten-Stromregelung um einen Querzweig 26 erweitert, der die Ausgangsspannung Δu*_{sq} des Stromreglers 14 in der Wirkachse auf die Reglerspannung Δu*ₛₚ des Stromreglers 12 in der Blindachse aufgeschaltet.

Dieser Querzweig 26 enthält zwei Multiplizierer 28 und 30 und einen Tiefpaß 32, auch als Verzögerungsglied bezeichnet. Die Multiplizierer 28 und 30 sind jeweils einem Eingang des Querzweiges 26 nachgeschaltet, wobei der Tiefpaß 32 einem Ausgang des Querzweiges 26 vorgeschaltet ist. Der Multiplizierer 28 verknüpft das eine Eingangssignal Ständerfrequenz ωₛ mit den Koeffizienten Zeitkonstante τ und Verstärkungsfaktor k. Anstatt der Ständerfrequenz ωₛ kann auch die Drehzahl n, der Ansteuergrad a oder eine andere, der Frequenz proportionale Größe verwendet werden. Die erzeugte Frequenzgröße τkωₛ wird mittels des zweiten Multiplizierers 30 mit der zweiten Eingangsgröße Δu*_{sq} multipliziert. Die erzeugte frequenzabhängige Spannungskomponente Δu*_{sq}τkωₛ wird mittels des Verzögerungsgliedes 32 auf den Addierer 16 in der Blindachse geschaltet.

Dies bewirkt, daß der Ausgang des Reglers 14 in der Wirkachse nicht nur die Wirkspannung u*_{sq} verändert (wie bei der Zweikomponenten-Stromregelung), sondern über die Änderung der Blindspannung u*ₛₚ auch eine Drehung des Spannungszeigers u*ₛ bewirkt (wie bei der Wirkstromregelung). Gleichzeitig läßt sich durch diesen Querzweig 26 erreichen, daß eine Änderung der Ausgangsspannung u*_{sq} in der Wirkachse den Blindstrom iₛₚ nicht beeinflußt, die Regelkreise also entkoppelt sind. Die für die Zweikomponenten-Stromregelung typischen langsamen Ausgleichsvorgänge bei verstimmten Vorsteuernetzwerk 20 treten daher nicht mehr auf. Für eine ideale Entkopplung ist es ratsam, die Zeitkonstante des Verzögerungsgliedes 32 gleich der Kurzschlußzeitkonstanten des Motors zu wählen und die Verstärkung k proportional zur Ständerfrequenz ωₛ zu setzen. Im folgenden wird die Wirkung des Querzweiges 26 näher erläutert:

Sind die Parameter der Vorsteuerung richtig eingestellt, so liefern beide Regler 12 und 14 an ihren Ausgängen Regler-Stellgrößen Δu*ₛₚ und Δu*_{sq}, die Null sind. Die für die gewünschten Stromkomponenten i*ₛₚ und i*_{sq} erforderlichen Spannungskomponenten u*ₛₚ und u*_{sq} werden vom Vorsteuernetzwerk 20 berechnet. Auch der Querzweig 26 liefert an seinem Ausgang Null.

Bei einer Regelbewegung des Reglers 14 in der q-Achse wird ohne Querzweig 26 zunächst nur die Spannung in der eigenen Achse verändert. Erst durch ein Abweichen des Iststromes iₛₚ infolge der Regelbewegung erzeugt nun der Stromregler 12 in p-Richtung die passende Änderung der Spannung Δu*ₛₚ.

Der Querzweig 26 berechnet zu der Regelbewegung Δu*_{sq} die passende Spannung Δu*ₛₚ direkt; damit wird ein Ausgleichsvorgang über den Stromregler 12 in der p-Achse vermieden. Der Querzweig 26 stabilisiert also die Zweikomponenten-Stromregelung, insbesondere bei höheren Drehzahlen.

Der p-Anteil des Stromreglers 12 liefert bei richtig eingestellten Parametern im Vorsteuernetzwerk 20 am Ausgang Null. Bei Erreichen der Aussteuergrenze würde der Integralanteil des Reglers 12 davonlaufen. Dies kann man dadurch verhindern, daß der Integralanteil derart frequenzabhängig begrenzt wird, daß an der Aussteuergrenze der Integralanteil zu Null gemacht wird. Dazu ist der Stromregler 12 mit einem Begrenzer 34 versehen, dessen Steuereingang mit einem Ausgang eines Kennliniengebers 36 verbunden ist, an dessen Eingang die Ständerfrequenz ωₛ ansteht. Alternativ kann am Eingang des Kennliniengebers auch die Drehzahl n, der Ansteuergrad a oder eine andere frequenzproportionale Größe anstehen. Sobald die Begrenzung wirksam ist, hat das mehrere Auswirkungen auf das Verhalten der Regelung. Der verbleibende Regler 14 in der q-Achse wirkt zum einen direkt auf den Spannungskomponenten-Sollwert u*_{sq} und zum anderen über den Querzweig 26 auf die p-Komponente u*ₛₚ. Da im Betrieb an der Aussteuergrenze u*_{sq} groß ist gegenüber u*ₛₚ und zudem die Verstärkung k des Querzweiges 26 groß ist (ca. 5....15), führt eine Regelbewegung Δu*_{sq} in erster Linie zu einer Drehung des Spannungssollzeigers u*ₛ. Dieser wird in der Folge in der Amplitude begrenzt, so daß an der Aussteuergrenze der Regler 14 nur auf den Winkel, und damit auf die Frequenz Einfluß nimmt. Dies entspricht aber genau der Wirkungsweise der Wirkstromregelung. Der Übergang von der Zweikomponenten-Stromregelung, deren Verhalten durch den Querzweig 26 verbessert wurde, vollzieht sich also dann, wenn die Aussteuergrenze erreicht ist. Die Aussteuergrenze kann als eine gewünschte maximale Aussteuerung vorgegeben sein oder der maximalen, vom Stromrichter noch zu realisierenden Aussteuerung entsprechen.

Weil an der Aussteuergrenze sich das Streckenverhalten ändert, kann man für optimale Regeleigenschaften eine Adaption vornehmen. Dies kann geschehen durch:
- Änderung des P- und I-Anteils des Reglers 14 in der q-Achse
- Ändern des Faktors k des Querzweiges 26
- Ändern der Zeitkonstanten τ des Querzweiges 26
- Kombination der einzelnen Möglichkeiten

Im Feldschwächbereich sinkt der Rotorfluß Ψ′*_{R} und damit der Strom iₛₚ in magnetisierender Richtung unter seinen Nennwert, der Stromregler 12 in der p-Achse ist infolge der Begrenzung an seinem Ausgang außer Betrieb. Um das Vorsteuernetzwerk 20 für gute Regeleigenschaften mit dem in der Maschine tatsächlich vorhandenen magnetisierenden Strom zu speisen, kann man noch eine Spannungsmaximumregelung 38 hinzufügen. Diese Regelung 38 senkt den Rotorfluß Ψ′*_{R} im Vorsteuernetzwerk 20 so weit ab, bis der Betrag der Sollspannung u*ₛ auf eine gegebene Maximalspannung uₘₐₓ gesunken ist. So bildet sich eine interne, nicht über die Maschine wirksame Regelschleife aus, die aus uₘₐₓ den richtigen Rotorfluß Ψ′*_{R} und die richtige Stromkomponente i*ₛₚ ermittelt. Sie ist nur Feldschwächbetrieb aktiv und kann Ψ′*_{R} nur absenken, jedoch nicht anheben.

Das erfindungsgemäße Stromregelverfahren verbindet die Vorteile von Zweikomponenten-Stromregelung und Wirkstromregelung in nahezu idealer Weise miteinander. Solange die Spannung nicht begrenzt ist, hat die neue Struktur das gleiche gute dynamische Verhalten wie die Zweikomponenten-Stromregelung, reagiert aber weniger empfindlich auf ein verstimmtes Vorsteuernetzwerk 20. Bei Erreichen der Spannungsdecke geht sie automatisch das Verhalten der Wirkstromregelung über, ohne daß eine Strukturumschaltung erforderlich wäre. Die Stabilität im Feldschwächbereich ist bei der neuen Struktur sogar besser als die der Wirkstromregelung. Wie bei der Wirkstromregelung ist auch ein Betrieb mit fester Aussteuerung (z.B. reine Vollblocktaktung) möglich.

## Patentansprüche

1. Stromregelverfahren für einen spannungseinprägenden Umrichter einer Drehfeldmaschine mit einem Ständer, wobei eine flußbildende Stromkomponente (iₛₚ) und eine drehmomentbildende Stromkomponente (i_{sq}) eines ermittelten Ist-Stromvektors (iₛ) jeweils auf eine gewünschte Stromkomponente (i*ₛₚ, i*_{sq}) eines Soll-Stromvektors (i*ₛ) geregelt werden, wobei jeweils eine Regler-Stellgröße (Δu*ₛₚ, Δu*_{sq}) mit einer Vorsteuergröße (u*ₛₚᵥₒᵣ, u*_{sqvor}) überlagert wird, **dadurch gekennzeichnet,** daß die drehmomentbildende Regler-Stellgröße (Δu*_{sq}) in Abhängigkeit einer Frequenzgröße (τkωₛ) verzögert auf die flußbildende Regler-Stellgröße (Δu*ₛₚ) einwirkt, wobei diese Frequenzgröße (τkωₛ) durch eine Multiplikation des Eingangssignals Ständerfrequenz (ωₛ) mit Koeffizienten Verzögerungszeitkonstante (τ) und Verstärkungsfaktor (k) bestimmt wird.

2. Stromregelverfahren nach Anspruch 1, **dadurch gekennzeichnet,** daß die Koeffizienten Verzögerungszeitkonstante (τ) und Verstärkungsfaktor (k) der Frequenzgröße (τkωₛ) und die Koeffizienten Proportionalanteil (P) und Integralanteil (I) der Regelung der flußbildenden Stromkomponente (iₛₚ) in Abhängigkeit der Ständerfrequenz (ωₛ) verändert werden.

3. Stromregelverfahren nach Anspruch 1, **dadurch gekennzeichnet,** daß die Koeffizienten Verzögerungszeitkonstante (τ) und Verstärkungsfaktor (k) der Frequenzgröße (τkωₛ) und die Koeffizienten Proportionalanteil (P) und Integralanteil (I) der Regelung der flußbildenden Stromkomponente (iₛₚ) in Abhängigkeit der Aussteuerung (a) verändert werden.

4. Vorrichtung zur Durchführung des Stromregelverfahrens für einen spannungseinprägenden Umrichter nach Anspruch 1, bestehend aus einem flußbildenden und drehmomentbildenden Regelkanal, die jeweils aus einem eingangsseitigen Vergleicher (8,10), einem Regler (12,14) und einem ausgangsseitigen Addierer (16,18) bestehen, wobei die Addierer (16,18) jeweils mit einem Vorsteuernetzwerk (20) verknüpft sind, **dadurch gekennzeichnet,** daß der Ausgang des Reglers (14) des drehmomentbildenden Regelkanals mittels eines Querzweiges (26), an dessen zweiten Eingang ein Frequenzsignal (ωₛ) ansteht, mit dem Addierer (16) des flußbildenden Regelkanals verknüpft ist.

5. Vorrichtung nach Anspruch 4, **dadurch gekennzeichnet,** daß den Eingängen des Querzweiges (26) jeweils ein Multiplizierer (28,30) nachgeschaltet ist, wobei am zweiten Eingang des ersten Multiplizierers (28) Koeffizienten (τ, k) und am zweiten Eingang des zweiten Multiplizierers (30) die Frequenzgröße (τkωₛ) des ersten Multiplizierers (28) anstehen, und wobei der Ausgang des zweiten Multiplizierers (30) mit einem ausgangsseitigen Tiefpaß (32) verbunden ist.

6. Vorrichtung nach Anspruch 4 oder 5, **dadurch gekennzeichnet,** daß der Regler (12) des flußbildenden Regelkanals mit einem Begrenzer (34) versehen ist, dessen Steuereingang mit einem Ausgang eines Kennliniengebers (36) verbunden ist, an dessen Eingang ein Signal (ωₛ bzw. a) ansteht.

7. Vorrichtung nach einem der Ansprüche 4 bis 6, **dadurch gekennzeichnet,** daß den Eingängen des Querzweiges (26), an denen die Koefrizienten (τ, k) anstehen, jeweils mit einem Kennliniengeber verbunden sind, an deren Eingängen jeweils ein Signal (ωₛ bzw. a) anstehen.

8. Vorrichtung nach einem der vorgenannten Ansprüche 4 bis 7, **dadurch gekennzeichnet,** daß ein Mikrorechner vorgesehen ist.

## Claims

1. Current-control method for a voltage-injecting converter of a polyphase machine with a stator, whereby a flow-forming current component (iₛₚ) and a torque-forming current component (i_{sq}) of a determined actual current vector (iₛ) are in each case controlled to a desired current component (i*ₛₚ, i*_{sq}) of a desired current vector (i*ₛ), whereby in each case a controller correcting variable (Δu*ₛₚ, Δu*_{sq}) is superimposed with a precontrol variable (u*ₛₚᵥₒᵣ, u*_{sqvor}), characterized in that the torque-forming controller correcting variable (Δu*_{sq}) in dependence upon a frequency variable (τkωₛ) acts in a delayed manner on the flow-forming controller correcting variable (Δu*ₛₚ), whereby this frequency variable (τkωₛ) is determined by a multiplication of the input signal stator frequency (ωₛ) with coefficients delay time constant (τ) and amplification factor (k).

2. Current-control method according to claim 1, characterized in that the coefficients delay time constant (τ) and amplification factor (k) of the frequency variable (τkωₛ) and the coefficients proportional part (P) and integral part (I) of the control of the flow-forming current component (iₛₚ) are altered in dependence upon the stator frequency (ωₛ).

3. Current-control method according to claim 1, characterized in that the coefficients delay time constant (τ) and amplification factor (k) of the frequency variable (τkωₛ) and the coefficients proportional part (P) and integral part (I) of the control of the flow-forming current component (iₛₚ) are altered in dependence upon the modulation (a).

4. Device for carrying out the current-control method for a voltage-injecting converter according to claim 1, consisting of a flow-forming and torque-forming control channel, each of which consists of an input-side comparator (8, 10), a controller (12, 14) and an output-side adder (16, 18), whereby the adders (16, 18) are in each case linked to a precontrol network (20), characterized in that the output of the controller (14) of the torque-forming control channel is linked by means of a shunt arm (26), at the second input of which there is a frequency signal (ωₛ), to the adder (16) of the flow-forming control channel.

5. Device according to claim 4, characterized in that downstream of the inputs of the shunt arm (26) there is in each case a multiplier (28, 30), whereby at the second input of the first multiplier (28) there are coefficients (τ, k) and at the second input of the second multiplier (30) there is the frequency variable (τkωₛ) of the first multiplier (28), and whereby the output of the second multiplier (30) is connected to an output-side low pass (32).

6. Device according to claim 4 or 5, characterized in that the controller (12) of the flow-forming control channel is provided with a limiter (34), the control input of which is connected to an output of a characteristic generator (36), at the input of which there is a signal (ωₛ or a).

7. Device according to one of claims 4 to 6, characterized in that the inputs of the shunt arm (26), at which there are the coefficients (τ, k), are in each case connected to a characteristic generator, at the inputs of which there is in each case a signal (ωₛ or a).

8. Device according to one of the above claims 4 to 7, characterized in that a microcomputer is provided.

## Revendications

1. Procédé de régulation de courant pour un convertisseur de fréquence injectant une tension, d'une machine à champ tournant comportant un stator, selon lequel on règle une composante de courant (iₛₚ) formant le flux et une composante de courant (i_{sq}) formant le couple, d'un vecteur de courant réel déterminé (iₛ) sur une composante de courant souhaitée (i*ₛₚ, i*_{sq}) d'un vecteur de courant de consigne (i*ₛ), et selon lequel on superpose une grandeur de commande pilote (u*ₛₚᵥₒᵣ,u*_{sqvor}) à chaque grandeur réglante (Δu*ₛₚ, Δu*_{sq}) d'un régulateur, caractérisé par le fait que la grandeur réglante (Δu*_{sq}), qui forme le couple, du régulateur agit d'une manière retardée, en fonction d'une grandeur de fréquence (τkωₛ), sur la grandeur réglante (Δu*ₛₚ), qui forme le flux, du régulateur, cette grandeur de fréquence (τkωₛ) étant déterminée par une multiplication de la fréquence statorique (ωₛ) du signal d'entrée par des coefficients, qui sont une constante de temps de retardement (τ) et un facteur d'amplification (k).

2. Procédé de régulation de courant suivant la revendication 1, caractérisé par le fait que l'on change les coefficients, formés par la constante de temps de retardement (τ) et par le facteur d'amplification (k), de la grandeur de fréquence (τkωₛ) et les coefficients, formés par la partie proportionnelle (P) et la partie intégrale (I), de la régulation de la composante de courant (iₛₚ), qui forme le flux, en fonction de la fréquence statorique (ωₛ).

3. Procédé de régulation de courant suivant la revendication 1, caractérisé par le fait que l'on change les coefficients, qui sont formés par la constante de temps de retardement (τ) et par le facteur d'amplification (k), de la grandeur de fréquence (τkωₛ) et les coefficients, qui sont formés par la partie proportionnelle (P) et la partie intégrale (I), de la régulation de la composante de courant (iₛₚ), qui forme le flux, en fonction de la modulation (a).

4. Dispositif pour la mise en oeuvre du procédé de régulation de courant pour un convertisseur, injectant de tension, suivant la revendication 1, constitué d'un canal de régulation qui forme le flux et d'un canal de régulation qui forme le couple, ces canaux étant constitués chacun d'un comparateur (8,10) situé côté entrée, d'un régulateur (12,14) et d'un additionneur (16,18) situé côté sortie, les additionneurs (16,18) étant combinés respectivement à un réseau de commande pilote (20), caractérisé par le fait que la sortie du régulateur (14) du canal de régulation formant le couple est combinée, au moyen d'une branche transversale (26), à la seconde entrée de laquelle est appliqué un signal de fréquence (ωₛ), à l'additionneur (16) du canal de régulation, qui forme le flux.

5. Dispositif suivant la revendication 4, caractérisé par le fait qu'un multiplicateur (28,30) est branché en aval de chacune des entrées de la branche transversale (26), des coefficients (τ, k) sont appliqués à la seconde entrée du premier multiplicateur (28) et la grandeur de fréquence (τkωₛ) du premier multiplicateur (28) est appliquée à l'entrée du second multiplicateur (30) et la sortie du second multiplicateur (30) est reliée à un filtre passe-bas (32) situé côté sortie.

6. Dispositif suivant la revendication 4 ou 5, caractérisé par le fait que le régulateur (12) du canal de régulation formant le flux est muni d'un limiteur (34), dont l'entrée de commande est reliée à une sortie d'un générateur de courbes caractéristiques (36), à l'entrée duquel est appliqué un signal (ωₛ ou a).

7. Dispositif suivant l'une des revendications 4 à 6, caractérisé par le fait que les entrées de la branche transversale (26), auxquelles sont appliqués les coefficients (τ, k), sont reliées à un générateur de courbes caractéristiques, aux entrées duquel est appliqué un signal (ωₛ et a).

8. Dispositif suivant l'une des revendications précédentes 4 à 7, caractérisé par le fait qu'il est prévu un micro-ordinateur.
